# EUROPÄISCHE PATENTANMELDUNG

(11) **EP 3 176 470 A1**
(43) Veröffentlichungstag der Anmeldung: **07.06.2017**
(21) Anmeldenummer: 16200191.1
(22) Anmeldetag: 23.11.2016
(51) Int. Cl.: F16H 57/025

(54) **GETRIEBEHALTER FÜR EINE ROLLENPRESSE UND VERFAHREN ZUM AUSBAU DES GETRIEBES EINER ROLLENPRESSE**

(30) Priorität: 30.11.2015 DE 102015223694
(71) Anmelder: Takraf GmbH, 04347 Leipzig (DE)
(72) Erfinder: Frangenberg, Meinhard, 51515 Kürten-Engeldorf (DE)
(74) Vertreter: Kailuweit & Uhlemann Patentanwälte Partnerschaft mbB

(57) **Zusammenfassung**

Der erfindungsgemäße Getriebehalter für eine Rollenpresse hat einen zweiteiligen Aufbau mit einem Getriebeteil, das mit dem Getriebe verbunden ist und einem separaten Drehmomentstützenteil, das mit dem Maschinengrundrahmen, bzw. Fundament zu verbinden ist. Getriebe- und Drehmomentstützenteil des Getriebehalters sind lösbar miteinander verbindbar, bevorzugt mittels einer Schraub- bzw. Bolzenverbindung. In einer Ausführung hat diese Verbindung zwei Schrauben bzw. Bolzen. Vorteilhaft kann so die De- bzw. Montage der Rollen deutlich einfacher als nach dem Stand der Technik erfolgen, da lediglich die Schraub- bzw. Bolzenverbindung zwischen Getriebe- und Drehmomentstützenteil des Getriebehalters gelöst werden muss. Vorteilhaft sind so für den Getriebeausbau deutlich weniger Schrauben/Bolzen zu lösen, die zudem besser zugänglich sind und voneinander einen deutlich größeren Abstand aufweisen als nach dem Stand der Technik. Zudem wirken durch das symmetrische Getriebeteil keine einseitigen Gravitationskräfte nach dem Ausbau. Ebenso vorteilhaft spielt das Anzugsmoment der Schrauben/Bolzen keine vordergründige Rolle. Als weiterer Vorteil ist der erfindungsgemäße Getriebehalter einfach und kostengünstig herstellbar. Durch die kompakte Form des Getriebeteils entstehen weiterhin vorteilhaft geringe Form- und damit Herstellungskosten.

## Beschreibung

Die Erfindung bezieht sich auf einen Getriebehalter für eine Rollenpresse, eine Rollenpresse aufweisend einen derartigen Getriebehalter und ein Verfahren zum Ausbau eines Getriebes einer Rollenpresse.

Bei vielen Rollenpressen ist zwischen den Antriebsmotoren und den Rollen ein Getriebe angeordnet. Dieses Getriebe ist über einen Getriebehalter, der auch als Drehmomentstütze fungiert, am Fundament oder wenn vorhanden Fundamentrahmen der Rollenpresse befestigt. Drehmomentstütze bedeutet hier, dass eine Rotation von Getriebe bzw. Antriebsmotor relativ zum Maschinenrahmen der Rollenpresse verhindert wird.

Diese Getriebehalter sind nach dem Stand der Technik als große flächige unsymmetrische Stahlteile, zu einer Seite hin weit ausladend, hinsichtlich der zu übertragenden Kräfte aus dem Antriebsdrehmoment ausgebildet, die über einen Flansch mit einer Vielzahl von großen Schrauben am Getriebe befestigt werden. Diese Verbindung erfordert ein gleichmäßiges Anziehen der Schrauben, was sich in der Praxis sehr schwierig gestaltet, da entsprechendes Werkzeug, das sowohl für die Größe der Schrauben als auch für die geringen Schraubenabstände geeignet ist, kaum vorhanden ist und daher die Schrauben meist mit einem Hammer "festgeschlagen" werden. Dies scheint insbesondere relevant vor dem Hintergrund, dass die Rollen einer Rollenpresse regelmäßig für Wartungsarbeiten demontiert werden müssen und hierfür die Getriebe mit anmontiertem Getriebehalter von der Welle abgezogen werden. Der zu einer Seite hin weit ausladende Getriebehalter wirkt hierbei als sehr hinderlich, da zum einen der Platz zum Ausbau berücksichtigt werden muss und zum anderen die Gravitationskraft versucht das Getriebe mit dem Getriebehalter zu drehen. Die Alternative den Getriebehalter vom Getriebe zu demontieren ist möglich, aber hinsichtlich der Vielzahl an Schrauben sehr aufwändig und daher Zeit raubend. Beispielsweise bei einer Getriebewartung ist dieser Aufwand unumgänglich.

Ein derartiger Getriebehalter nach dem Stand der Technik ist beispielsweise in dem Prospekt "Einmahlig. Mahlanlagen von KHD Humboldt Wedag." 2-201d (von 7/2000) auf Seite 15 gezeigt. Nicht zuletzt ist die Befestigung durch die Vielzahl der Schrauben zeitaufwendig und der Getriebehalter erfordert einen hohen Fertigungsaufwand und damit auch hohe Herstellungskosten.

Aufgabenstellung der vorliegenden Erfindung ist einen Getriebehalter vorzuschlagen, der vorgenannte Nachteile des Standes der Technik überwindet.

Diese Aufgabenstellung wird erfindungsgemäß gelöst durch einen Getriebehalter mit den Merkmalen des Anspruches 1. Bevorzugte Weiterbildungen der Erfindung sind Gegenstand von Unteransprüchen. Eine erfindungsgemäße Rollenpresse ist Gegenstand des Anspruches 7 und das Verfahren zum Ausbau des Getriebes einer Rollenpresse ist Gegenstand von Anspruch 12.

Der erfindungsgemäße Getriebehalter für eine Rollenpresse hat einen zweiteiligen Aufbau mit einem Getriebeteil, das mit dem Getriebe verbunden ist und einem separaten Drehmomentstützenteil, das mit dem Maschinengrundrahmen, bzw. Fundament zu verbinden ist. Getriebe- und Drehmomentstützenteil des Getriebehalters sind lösbar miteinander verbindbar, bevorzugt mittels einer Schraub- bzw. Bolzenverbindung. In einer Ausführung hat diese Verbindung zwei Schrauben bzw. Bolzen. Vorteilhaft kann so die De- bzw. Montage der Rollen deutlich einfacher als nach dem Stand der Technik erfolgen, da lediglich die Schraub- bzw. Bolzenverbindung zwischen Getriebe- und Drehmomentstützenteil des Getriebehalters gelöst werden muss. Zudem besteht so vorteilhaft die Möglichkeit das Drehmomentstützenteil, nach dem Lösen der Verbindung zwischen Drehmomentstützenteil und Getriebeteil, zur Seite wegzuklappen und dadurch den Bauraum für den Getriebeausbau deutlich zu vergrößern.

Die Anbindung des erfindungsgemäßen Getriebehalters an den Maschinengrundrahmen bzw. das Fundament erfolgt entsprechend dem Stand der Technik. Häufig wird dabei über Verbindungselemente eine Torsionswelle zwischen den Verbindungspunkten von Getriebehalter und Maschinengrundrahmen/ Fundament eingebunden. Die Positionierung der Torsionswelle kann natürlich auch anderweitig erfolgen, beispielsweise ohne Verbindungselemente direkt an den Verbindungspunkten zwischen Getriebehalter und Maschinengrundrahmen bzw. Fundament oder auch in den Maschinenrahmen integriert werden. Im Rahmen dieser Anmeldung umfasst die Formulierung Verbindung Maschinengrundrahmen bzw. Fundament eine unmittelbare Verbindung oder eine mittelbare über Verbindungselemente o.ä..

Vorteilhaft sind so deutlich weniger Schrauben/Bolzen zu lösen, die zudem besser zugänglich sind und voneinander einen deutlich größeren Abstand aufweisen als nach dem Stand der Technik. Zudem wirken durch das symmetrische Getriebeteil keine einseitigen Gravitationskräfte nach dem Ausbau. Ebenso vorteilhaft spielt das Anzugsmoment der Schrauben/Bolzen keine vordergründige Rolle. Als weiterer Vorteil ist der erfindungsgemäße Getriebehalter einfach und kostengünstig herstellbar. Durch die kompakte Form des Getriebeteils entstehen weiterhin vorteilhaft geringe Form- und damit Herstellungskosten.

In einer weiteren Ausführungsform sind beide Teile des Getriebehalters symmetrisch bezogen auf ihre Mittenebene. Dadurch kann das gleiche Drehmomentstützenteil für beide Getriebe einer Rollenpresse eingesetzt werden, indem es einfach umgedreht eingebaut wird. Dies ermöglicht vorteilhaft eine kostengünstige Ersatzteilhaltung.

Die erfindungsgemäße kompakte und symmetrische Form des Getriebeteils der Drehmomentstütze für den Fall, wenn man diesen Getriebehalter fest an das Getriebegehäuse angießt, schließt eine Rechts- und Linksausführung des Getriebes aus.

Die Verbindung von Getriebeteil mit dem Getriebe erfolgt in einer Ausführung als stoffschlüssige Verbindung. Beispielsweise wird dabei das Getriebeteil beim Urformen des Getriebegehäuses mit hergestellt. Alternativ kann die Verbindung auch durch Schweißen erfolgen. Vorteilhaft erfolgt die Verbindung so einfach und kostengünstig und sehr stabil.

In einer anderen Ausführung erfolgt die Verbindung vom Getriebeteil mit dem Getriebe mittels einer Schraub- bzw. Bolzenverbindung, entsprechend dem Stand der Technik. Vorteilhaft kann so der erfindungsgemäße Getriebehalter auch bei bestehenden Rollenpressen nachgerüstet werden. Die aufwendige Schraubverbindung zwischen dem Getriebeteil des Getriebehalters und dem Getriebe muss nur einmal hergestellt werden, für weitere Demontagen wird dann immer die Verbindung zwischen dem Getriebeteil und dem Drehmomentstützenteil gelöst.

In einer weiteren Ausführung hat das Getriebeteil des Getriebehalters eine rechteckige Grundform mit einer Öffnung zur Durchführung der Abtriebswelle des Getriebes. Bevorzugt sind im Bereich der Ecken der rechteckigen Grundform Löcher für die Bolzenverbindung zum Drehmomentstützenteil vorgesehen.

Das Drehmomentstützenteil ist in einer Ausführung im Wesentlichen dreieckig ausgebildet, wobei zwei Ecken des Dreieckes mit den Löchern in den Eckbereichen des Getriebeteils verbolzt sind und die dritte Ecke mit dem Maschinenrahmen bzw. dem Fundament der Rollenpresse zu verbinden ist, wobei einer der beiden Verbindungsbolzen zum Getriebeteil auch mit dem Maschinenrahmen bzw. dem Fundament verbunden ist. Ein derartiger Aufbau des Getriebehalters ist besonders einfach und kostengünstig herzustellen, gut zu befestigen und kann Kräfte gut aufnehmen.

In einer weiteren Ausführungsform ist eines der beiden Teile des Getriebehalters im Verbindungsbereich zum anderen Teil gabelförmig ausgebildet. Diese Gabelform umgreift das jeweils andere Teil im verbundenen Zustand. Vorteilhaft kann so die Verbindung von Getriebeteil und Drehmomentstützenteil deutlich stabilisiert werden, insbesondere können erheblich höhere Drehmomente aufgenommen werden.

Die erfindungsgemäße Rollenpresse weist einen zuvor beschriebenen erfindungsgemäßen Getriebehalter auf. Vorteilhaft kann so eine aufwendige Schraubenverbindung zwischen Getriebehalter und Getriebe entfallen, und damit auch teure Schrauben-Anziehwerkzeuge für hochbelastete Verschraubungen. Zudem entstehen die kompakte und einfache Gestaltung des Getriebehalters geringe Form- und damit Herstellungskosten.

Weiterhin vorteilhaft ist das Drehmomentstützenteil nach dem Lösen der Verbindung zum Getriebeteil seitlich wegschwenkbar, was die Händelbarkeit der Getriebe bei der De- und Montage von/auf die Rollen deutlich verbessert.

Die kompakte Form des Getriebeteils erlaubt zudem einen sehr viel geringeren Platzbedarf bei der Getriebede- und -montage von/auf die Rollen und auch beim Transport.

Durch die Symmetrie des Getriebeteils ergibt sich weiterhin vorteilhaft ein definierbarerer Schwerpunkt zum Anschlagen der Getriebe.

Aufgrund der kompakten Größe und Einfachheit des konstruktiven Aufbaus des Drehmomentstützenteils ergibt sich als weiterer Vorteil eine weltweit gute Beschaffbarkeit und Fertigung, bei geringen Kosten.

In einer Ausführungsform sind sowohl das Getriebeteil als auch das Drehmomentstützenteil jeweils mit mindestens einer Schraub- bzw. Bolzenverbindung mit dem Maschinenrahmen bzw. dem Fundament der Rollenpresse verbunden.

Die Vielzahl an nicht vorschriftsmäßig angezogenen Schrauben ist eliminiert, durch eine definierte und somit betriebssichere Bolzen-Befestigung der Drehmomentstütze am Getriebe.

In einer weiteren Ausführungsform ist das Getriebeteil stoffschlüssig mit dem Getriebe verbunden.

In einer Ausgestaltung der Ausführungsform ist das Getriebeteil am Getriebe angegossen. Vorteilhaft ist das Getriebeteil so fest mit dem Getriebe verbunden, bei gleichzeitig geringem Montageaufwand, da die Gussform einfach erweitert wird.

Bei dem erfindungsgemäßen Verfahren zum Ausbau des Getriebes einer Rollenpresse mit einem oben beschriebenen Getriebehalter wird zuerst die Verbindung zwischen Getriebeteil und Drehmomentstützenteil gelöst. Dies ermöglicht ein Wegklappen des Drehmomentstützenteils mit der Verbindung zum Maschinenrahmen bzw. Fundament als Kippachse. Besonders geeignet sind hierfür Getriebehalter, bei denen der Getriebeteil mit einer Bolzenverbindung mit dem Maschinenrahmen bzw. Fundament verbunden ist, ansonsten muss vor dem Wegklappen die übrigen Verbindungen gelöst werden, um das Wegklappen zu ermöglichen. Vorteilhaft wird durch das Wegklappen der Bauraum für Arbeiten am Getriebe deutlich vergrößert. Nach dem Stand der Technik stören die auskragenden Getriebehalter erheblich beim Ausbau und verkleinern den Bauraum.

Nachfolgend wird ein Ausführungsbeispiel der Erfindung anhand von Figuren erläutert, dabei zeigen:
- Figur 1: einen erfindungsgemäßen Getriebehalter,
- Figur 2: einen erfindungsgemäßen Getriebehalter befestigt an einem Getriebe, und
- Figur 3: einen erfindungsgemäßen Getriebehalter mit Torsionswelle.

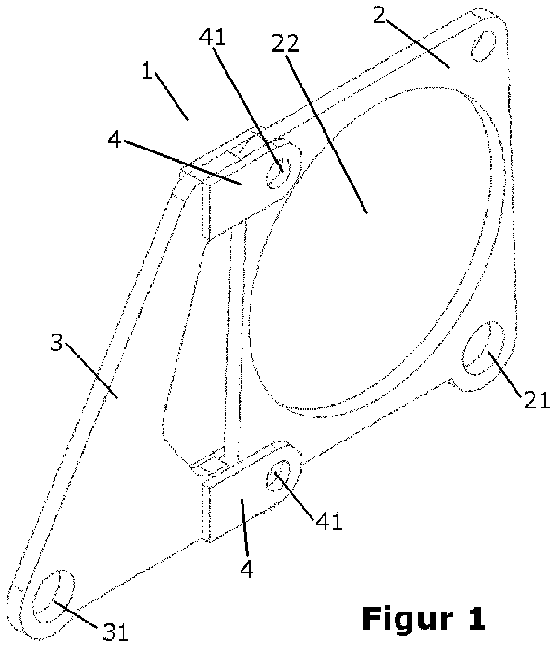

In Figur 1 ist ein Getriebehalter 1 gezeigt, der erfindungsgemäß zweiteilig aufgebaut ist, mit einem Getriebeteil 2 und einem Drehmomentstützenteil 3. Das Getriebeteil 2 hat eine mittige Öffnung 22, durch die im eingebauten Zustand das Getriebe geführt wird. Getriebeteil 2 und Drehmomentstützenteil 3 des Getriebehalters 1 sind über Verbindungslöcher 41 mittels (hier nicht gezeigten) Bolzen verbunden. Im Bereich der Verbindungslöcher 41 hat das Drehmomentstützenteil 3 einen gabelförmigen Bereich 4, wobei die Gabel das Getriebeteil 2 im Bereich des Verbindungsloches 41 umschließt. Das Getriebeteil 2 hat ein weiteres Verbindungsloch 21 zur Verbindung mit dem hier nicht gezeigten Maschinenrahmen bzw. Fundament, ebenso wie das Drehmomentstützenteil 3 ein Verbindungsloch 31 zur Verbindung mit dem Maschinenrahmen bzw. dem Fundament aufweist.

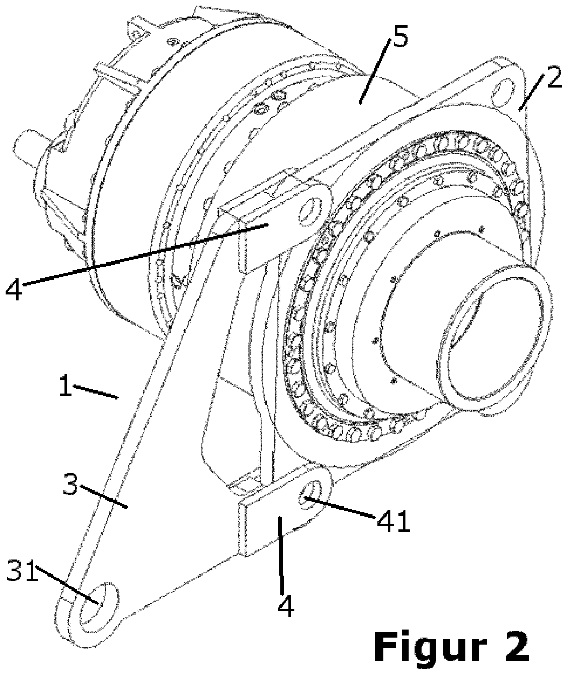

Figur 2 zeigt den Getriebehalter 1 im eingebauten Zustand. Dabei ist der Getriebeteil 2 an ein Getriebe 5 angegossen.

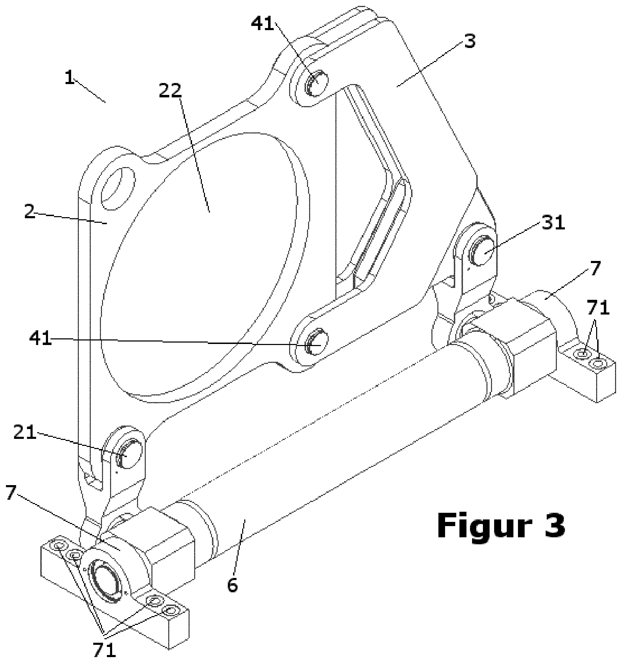

Figur 3 zeigt eine geringfügig andere Ausführung des Getriebehalters 1. Hier ist nahezu der gesamte Drehmomentstützteil 3 doppelwandig ausgeführt, außer im Bereich des Verbindungsloches 31. Die Verbindungslöcher 21 und 31 verbinden den Getriebehalter 1 mit Verbindungselementen (auch als Lagerung bezeichnet) 7, die eine Torsionswelle 6 an ihren Enden aufnehmen und über Verbindungslöcher 71 mit dem Maschinengrundrahmen bzw. Fundament verbunden sind. In der Figur 3 sind in den Verbindungslöchern 21, 31 und 41 verbindende Bolzen eingezeichnet.

**Bezugszeichenliste**

| | |
|---|---|
| 1 | Getriebehalter |
| 2 | Getriebeteil |
| 21 | Verbindungsloch |
| 22 | Öffnung Getriebe |
| 3 | Drehmomentstützenteil |
| 31 | Verbindungsloch |
| 4 | gabelförmiger Bereich |
| 41 | Verbindungsloch |
| 5 | Getriebe |
| 6 | Torsionswelle |
| 7 | Verbindungselement/ Lagerung |
| 71 | Verbindungsloch Verbindungselement-Maschinengrundrahmen |

## Patentansprüche

1. Getriebehalter (1) für eine Rollenpresse mit einem zweiteiligen Aufbau, mit einem Getriebeteil (2), das mit dem Getriebe (5) verbunden wird, und einem Drehmomentstützenteil (3), das mit dem Maschinenrahmen oder Fundament der Rollenpresse zu verbinden ist, wobei Getriebeteil (2) und Drehmomentstützenteil (3) des Getriebehalters (1) fest miteinander verbindbar sind und wobei der Getriebeteil (2) eine rechteckige Grundform hat mit einer Öffnung zur Durchführung der Antriebswelle des Getriebes (5).

2. Getriebehalter (1) nach Anspruch 1, **dadurch gekennzeichnet, dass** das Getriebeteil (2) und das Drehmomentstützenteil (3) des Getriebehalters mittels Schraub- oder Bolzenverbindung miteinander verbunden sind.

3. Getriebehalter (1) nach Anspruch 1, **dadurch gekennzeichnet, dass** das Getriebeteil (2) im Bereich der Durchführung der Antriebswelle des Getriebes (5) eine Vielzahl von Löchern für eine Schraubverbindung mit dem Getriebe (5) aufweist.

4. Getriebehalter (1) nach einem der vorangehenden Ansprüche, **dadurch gekennzeichnet, dass** eines der beiden Teile des Getriebehalters (1) im Verbindungsbereich zum anderen Teil gabelförmig ausgebildet ist und damit am jeweils anderen Teil beidseitig anliegt und mittels einer Schraube oder Bolzen durch diesen Bereich gesichert ist.

5. Getriebehalter (1) nach einem der vorangehenden Ansprüche, **dadurch gekennzeichnet, dass** das Drehmomentstützenteil (3) doppelwandig ausgebildet ist außer in dem Bereich einer Bolzenverbindung (31).

6. Rollenpresse aufweisend einen Getriebehalter (1) nach einem der vorangehenden Ansprüche.

7. Rollenpresse nach Anspruch 6, **dadurch gekennzeichnet, dass** das Getriebeteil (2) und das Drehmomentstützenteil (3) des Getriebehalters (1) jeweils mit mindestens einer Bolzenverbindung mit dem Maschinenrahmen oder dem Fundament der Rollenpresse verbunden sind.

8. Rollenpresse nach Anspruch 6 oder 7, **dadurch gekennzeichnet, dass** das Getriebeteil (2) stoffschlüssig mit dem Getriebe (5) verbunden ist.

9. Rollenpresse nach einem der Ansprüche 6 bis 8, **dadurch gekennzeichnet, dass** das Getriebeteil (2) am Getriebe (5) angegossen ist.

10. Rollenpresse nach einem der Ansprüche 6 bis 9, **dadurch gekennzeichnet, dass** das Getriebeteil (2) und das Drehmomentstützenteil (3) des Getriebehalters (1) mit jeweils einer Schraub- oder Bolzenverbindung am Maschinenrahmen bzw. dem Fundament der Rollenpresse befestigt sind.

11. Verfahren zum Ausbau eines Getriebes einer Rollenpresse nach Anspruch 10, aufweisend den Getriebehalter (1), **gekennzeichnet durch** die folgenden Verfahrensschritte:
- Lösen der Verbindung zwischen Getriebeteil (2) und Drehmomentstützenteil (3)
- wegklappen des Getriebeteils (2) um die Schraub- oder Bolzenverbindung zum Maschinenrahmen bzw. Fundament als Kippachse.
